# EUROPEAN PATENT APPLICATION

(11) **EP 4 568 396 A1**
(43) Date of publication of application: **11.06.2025**
(21) Application number: 23896397.9
(22) Date of filing: 31.10.2023
(51) Int. Cl.: H04W 72/21

(54) **UPLINK TRANSMISSION METHOD AND TERMINAL DEVICE**

(30) Priority: 28.11.2022 CN 202211506291
(71) Applicant: Huawei Technologies Co., Ltd., Shenzhen, Guangdong 518129 (CN)
(72) Inventor: ZHANG, Bangming, Shenzhen, Guangdong 518129 (CN); ZHANG, Wei, Shenzhen, Guangdong 518129 (CN)
(74) Representative: Pfenning, Meinig & Partner mbB
(86) International application number: PCT/CN2023/128235
(87) International publication number: WO 2024/114243

(57) **Abstract**

This application provides an uplink transmission method and a terminal device that can improve quality of an information stream and may be applied to a communication system. The method includes: An application processor AP determines, based on priority policy information corresponding to at least one second app, a quality assurance level of a first protocol packet corresponding to each of at least one information type of each second app. The priority policy information indicates a priority level of at least one information type of the app corresponding to the priority policy information. The AP sends, to a baseband chip, the quality assurance level of the first protocol packet corresponding to each of the at least one information type of each second app and the first protocol packet corresponding to each of the at least one information type of each second app. The baseband chip sends, based on the quality assurance level of the first protocol packet corresponding to each of the at least one information type of each second app, the first protocol packet corresponding to each of the at least one information type of each second app.

## Description

This application claims priority to Chinese Patent Application No. 202211506291.2, filed with the China National Intellectual Property Administration on November 28, 2022 and entitled "UPLINK TRANSMISSION METHOD AND TERMINAL DEVICE", which is incorporated herein by reference in its entirety.

### TECHNICAL FIELD

This application relates to the communication field, and in particular, to an uplink transmission method and a terminal device.

### BACKGROUND

Due to a limitation of a transmit power of a terminal device, a coverage area of an access network device, or the like, for example, in scenarios with weak mobile signals, such as a basement, a wilderness, or an edge of the access network device, or in scenarios with a dense population, such as a large conference, network congestion may occur between the terminal device and the access network device. A frequency of uplink network congestion between the terminal device and the access network device is high. As a result, it is difficult to transmit an information stream in the terminal device in a timely manner. For example, it is difficult to transmit an information stream having a high quality requirement such as timeliness in a timely manner. Consequently, problems such as a large delay are likely to occur, leading to poor quality of the information stream.

### SUMMARY

Embodiments of this application provide an uplink transmission method and a terminal device, to sort a plurality of information streams in different applications based on priority information of the information streams, thereby preferentially transmitting an information stream having a high quality requirement. Therefore, in the case of network congestion, problems such as a delay of the information stream having the high quality requirement can be reduced, and quality of the information stream having the high quality requirement such as a time limit can be ensured.

To achieve the foregoing objective, this application uses the following technical solutions.

According to a first aspect, an uplink transmission method is provided. The uplink transmission method is applied to a terminal device, and the terminal device includes an application processor AP and a baseband chip. The uplink transmission method includes: The AP determines, based on priority policy information corresponding to at least one second app, a quality assurance level of a first protocol packet corresponding to each of at least one information type of each second app. The AP sends, to the baseband chip, the quality assurance level of the first protocol packet corresponding to each of the at least one information type of each second app and the first protocol packet corresponding to each of the at least one information type of each second app. The baseband chip sends, based on the quality assurance level of the first protocol packet corresponding to each of the at least one information type of each second app, the first protocol packet corresponding to each of the at least one information type of each second app.

According to the uplink transmission method provided in the first aspect, the first protocol packet corresponding to each of the at least one information type of each second app may be transmitted based on priority levels of different information types in different apps, and a transmission sequence of protocol packets corresponding to information types that have different requirements for quality, such as timeliness, in the different apps is coordinated. For example, for an information type having a high quality requirement, a higher priority level may be set. In this way, the terminal device may preferentially send a protocol packet corresponding to the information type having the high quality requirement, so that a delay and a packet loss rate of the protocol packet corresponding to the information type having the high quality requirement can be reduced, and quality of the protocol packet corresponding to the information type having the high quality requirement can be better ensured.

In a possible design scheme, the priority policy information indicates a priority level of at least one information type of the app corresponding to the priority policy information.

Optionally, that the AP determines, based on priority policy information corresponding to at least one second app, a quality assurance level of a protocol packet corresponding to each of at least one information type of each second app may include: The AP determines, based on a priority level corresponding to each of the at least one information type of each second app, the quality assurance level of the protocol packet corresponding to each of the at least one information type of each second app. In this way, data of different information types of an app may be transmitted based on a running status of the app, so that quality of a protocol packet corresponding to an information type having a high quality requirement can be better ensured.

In a possible design scheme, a running status of the second app meets an effective condition of a quality assurance function. The effective condition of the quality assurance function may include: being effective when an app is in a foreground or in a background; or the effective condition includes: being effective when an app is in a foreground.

Optionally, the priority policy information may indicate an effective condition of a quality assurance function of an app corresponding to the priority policy information. Before that the AP determines, based on priority policy information corresponding to at least one second app, a quality assurance level of a first protocol packet corresponding to each of at least one information type of each second app, the method provided in the first aspect further includes: The AP obtains priority policy information corresponding to at least one first app. The AP determines the at least one second app based on the priority policy information corresponding to the at least one first app.

In a possible design scheme, the second app may alternatively be an app having quality assurance permission. This reduces impact of a malicious or low-quality app on communication in the terminal device, so that quality of information having a high quality requirement is better ensured, and system robustness is increased.

In a possible design scheme, the method provided in the first aspect further includes: The baseband chip obtains storage duration of the first protocol packet corresponding to each of the at least one information type of each second app. When the storage duration of the first protocol packet is greater than or equal to a storage duration threshold corresponding to the first protocol packet, the baseband chip deletes the first protocol packet. In this way, when an uplink network is congested, waiting time of a protocol packet can be reduced, thereby reducing a delay of a protocol packet having a high quality requirement, for example, a delay and a packet loss rate of an audio stream in an audio and video call, and ensuring quality of the protocol packet.

Optionally, the storage duration threshold of the first protocol packet is positively correlated with the quality assurance level of the first protocol packet. In this way, the quality of the protocol packet having the high quality requirement can be further ensured.

According to a second aspect, a terminal device is provided. The terminal device includes an application processor AP and a baseband chip. The AP is configured to determine, based on priority policy information corresponding to at least one second app, a quality assurance level of a first protocol packet corresponding to each of at least one information type of each second app. The AP is further configured to send, to the baseband chip, the quality assurance level of the first protocol packet corresponding to each of the at least one information type of each second app and the first protocol packet corresponding to each of the at least one information type of each second app. The baseband chip is configured to send, based on the quality assurance level of the first protocol packet corresponding to each of the at least one information type of each second app, the first protocol packet corresponding to each of the at least one information type of each second app.

In a possible design scheme, the priority policy information indicates a priority level of at least one information type of the app corresponding to the priority policy information.

Optionally, determining, by the AP based on the priority policy information corresponding to the at least one second app, the quality assurance level of the protocol packet corresponding to each of the at least one information type of each second app includes: The AP determines, based on a priority level corresponding to each of the at least one information type of each second app, the quality assurance level of the protocol packet corresponding to each of the at least one information type of each second app.

In a possible design scheme, a running status of the second app meets an effective condition of a quality assurance function. The effective condition of the quality assurance function includes: being effective when an app is in a foreground or in a background; or the effective condition includes: being effective when an app is in a foreground.

Optionally, the priority policy information indicates an effective condition of a quality assurance function of the app corresponding to the priority policy information. Before determining, based on the priority policy information of the at least one second app, the quality assurance level of the first protocol packet corresponding to each of the at least one information type of each second app, the AP is further configured to: obtain priority policy information corresponding to at least one first app, and determine the at least one second app based on the priority policy information corresponding to the at least one first app.

In a possible design scheme, the second app may alternatively be an app having quality assurance permission.

In a possible design scheme, the baseband chip is further configured to: obtain storage duration of the first protocol packet corresponding to each of the at least one information type of each second app, and when the storage duration of the first protocol packet is greater than or equal to a storage duration threshold corresponding to the first protocol packet, delete the first protocol packet.

Optionally, the storage duration threshold of the first protocol packet is positively correlated with the quality assurance level of the first protocol packet.

For technical effects of the second aspect, refer to the technical effects of the first aspect. Details are not described herein again.

According to a third aspect, a communication system is provided. The communication system includes a terminal device and a network device. The terminal device is configured to perform the method according to any one of the first aspect, and the network device is configured to receive a first protocol packet from the terminal device.

According to a fourth aspect, a computer-readable storage medium is provided. The computer-readable storage medium includes a computer program or instructions, and when the computer program or the instructions are run on a computer, the computer is enabled to perform the terminal device control method in the first aspect.

According to a fifth aspect, a computer program product is provided. The computer program product includes a computer program or instructions, and when the computer program or the instructions are run on a computer, the computer is enabled to perform the terminal device control method in the first aspect.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of an architecture of a terminal device according to an embodiment of this application;
FIG. 4 is a diagram of a software architecture of a terminal device according to an embodiment of this application;
FIG. 5(a) and FIG. 5(b) are diagrams of an interface of a terminal device according to an embodiment of this application;
FIG. 6 is a schematic flowchart of an uplink transmission method according to an embodiment of this application;
FIG. 7 is a diagram of a structure of a virtual queue according to an embodiment of this application;
FIG. 8 is a diagram of a structure of another virtual queue according to an embodiment of this application; and
FIG. 9 is a diagram of a structure of another terminal device according to an embodiment of this application.

### DESCRIPTION OF EMBODIMENTS

With reference to the accompanying drawings, the following describes in detail an uplink transmission method and a terminal device provided in embodiments of this application.

Terms "include", "have", and any other variants thereof in descriptions of embodiments of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

Terms such as "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features.

In embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. To be precise, use of the term "example", "for example", or the like is intended to present a related concept in a specific manner.

In the descriptions of embodiments of this application, unless otherwise specified, "a plurality of" means two or more. The term "and/or" in this specification describes only an association relationship between associated objects and indicates that three relationships may exist. For example, A and/or B may indicate the following three cases: Only A exists, both A and B exist, and only B exists.

Embodiments of this application may be applied to a communication system of a mobile communication network, for example, a 4^{th} generation (4^{th} generation, 4G) mobile communication system, for example, a long term evolution (long term evolution, LTE) system or a worldwide interoperability for microwave access (worldwide interoperability for microwave access, WiMAX) communication system, a 5^{th} generation (5^{th} generation, 5G) mobile communication system, for example, a new radio (new radio, NR) system, and a future communication system, for example, a 6^{th} generation (6^{th} generation, 6G) mobile communication system. The communication system may include at least one terminal device and at least one access network device. The terminal device and the access network device may exchange, based on an air interface resource, information, such as signaling, an audio stream, or a video stream.

Due to a limitation of a transmit power of the terminal device, a coverage area of the access network device, or the like, for example, in scenarios with weak mobile signals, such as a basement, a wilderness, or an edge of the access network device, or in scenarios with a dense population, such as a large conference, network congestion may occur between the terminal device and the access network device. A frequency of uplink network congestion between the terminal device and the access network device is high. As a result, it is difficult to transmit an information stream in the terminal device in a timely manner. For example, it is difficult to transmit an information stream having a high quality requirement such as timeliness in a timely manner. Consequently, problems such as a large delay are likely to occur, leading to poor quality of the information stream.

For the terminal device, there are various types of information streams that need to be sent, and bandwidths occupied by the different types of information streams are related to the types of the information streams. Therefore, a problem that the bandwidths occupied by the different types of information streams are unbalanced may occur. When an uplink network is congested, a bandwidth of an information stream related to a basic function needs to be preferentially ensured, to ensure user experience.

An audio and video call based on a voice over internet protocol (voice over internet protocol, VOIP) is used as an example. A bandwidth may be ensured by combining a real-time transport protocol (real-time transport protocol, RTP) and an RTP control protocol (RTP control protocol, RTCP). A bandwidth occupied by an audio stream is about 30 kilobits per second (kilobits per second, Kbps), and a bandwidth occupied by a video stream reaches 500 Kbps to 2000 Kbps. It may be learned that bandwidth consumption of the audio stream is less than one tenth of bandwidth consumption of the video stream. A basic capability of the audio and video call is audio stream communication. Therefore, in the case of network congestion, audio experience needs to take precedence over video experience. In other words, a bandwidth requirement of the audio stream takes precedence over that of the video stream.

To ensure audio and video experience, in some embodiments, an uplink bandwidth predicted by an application (application, app) may be preferentially allocated to the audio stream. For example, the app may predict an uplink bandwidth of a network, and allocate, based on the predicted uplink bandwidth, a bandwidth to different types of information streams in the app, such as an audio stream and a video stream. For example, the app may preferentially allocate a bandwidth to an information stream having a low bandwidth requirement, or the app may preferentially allocate a bandwidth to an information stream having a high priority.

An audio and video call is used as an example. In a process of the audio and video call, an information stream that needs to be transmitted between the terminal device and the access network device includes an audio stream and a video stream, and a bandwidth requirement of the audio stream takes precedence over a bandwidth requirement of the video stream. An app used for the audio and video call performs bandwidth prediction, to obtain a current bandwidth. The current bandwidth predicted by the app used for the audio and video call may be preferentially allocated to the audio stream, and a bandwidth other than a bandwidth allocated to the audio stream in the predicted bandwidth is then allocated to the video stream. For example, if the bandwidth predicted by the app used for the audio and video call is 500 Kbps, and the bandwidth requirement of the audio stream is 30 Kbps, the bandwidth of 30 Kbps may be allocated to the audio stream, and the remaining 470 Kbps may be allocated to the video stream. In this case, if a sending bit rate of the video stream exceeds 470 Kbps, a bit rate of a video encoder may be reduced to 470 Kbps. In this way, a delay problem caused by a case that the bandwidth allocated to the audio stream is less than 30 Kbps can be reduced, and quality of the audio stream can be preferentially ensured.

In the foregoing solution for transmitting an audio stream and a video stream, quality of the audio stream and the video stream may be ensured between the terminal device and the access network device based on the RTP and the RTCP.

An app in the terminal device may predict a current bandwidth based on an existing protocol.

For example, when an audio stream and a video stream are transmitted, an app used for an audio and video call may predict a current bandwidth based on the RTCP. For example, the app used for the audio and video call may obtain, based on exchange of an RTCP protocol packet and an RTCP protocol packet between the terminal device and the access network device, a round-trip time (round-trip time, RTT), a packet loss rate, and jitter information between the terminal device and the access network device, and further predict the current bandwidth based on the round-trip time (round-trip time, RTT), the packet loss rate, and the jitter information between the terminal device and the access network device. A jitter indicates a deviation between actual time at which a signal arrives at a node and expected time at which the signal arrives at the node. For example, an audio packet is expected to be received every 20 ms. However, due to a network problem, a next packet is received 30 ms later. In other words, a jitter of 10 ms (30-20) occurs.

However, in the foregoing solution based on the uplink bandwidth predicted by the terminal device, the following problems exist:

First, the uplink bandwidth needs to be predicted based on exchange of packets, such as RTCP packets in the audio stream and the video stream. In a scenario in which packet loss occurs or the delay increases sharply, the bandwidth is difficult to predict, or the predicted bandwidth has a large error. In this way, when a network condition is poor, uplink network congestion between the terminal device and the access network device causes an audio delay, making it difficult to ensure audio quality.

Second, an estimated value of the bandwidth is obtained based on statistics collection on a previous network condition, and there is a deviation between the estimated value and a current network condition. If the estimated value of the bandwidth is greater than an actual bandwidth, a bit rate for transmitting the audio stream and the video stream exceeds the actual bandwidth, causing network congestion. As a result, this causes an audio delay, resulting in audio frame freezing, and making it difficult to ensure audio quality.

Third, a problem of traffic contention between different applications on the terminal device cannot be resolved. For example, in the process of the audio and video call, if an upload service of another application occupies a large amount of bandwidth, causing uplink network congestion, a bandwidth value obtained through prediction by exchanging packets is less than the bandwidth requirement of the audio stream. This causes an audio delay, resulting in audio frame freezing, and making it difficult to ensure audio quality.

Fourth, in the case of network congestion, an audio stream is queued on a baseband chip (which may also be referred to as a modem core (modem core)) side for transmission. This causes an audio delay, resulting in audio frame freezing, and making it difficult to ensure audio quality.

In some other embodiments, in a communication system, a network element between an access network device and a core network may transmit, based on a priority of a data packet, an information stream, for example, an uplink information stream of a terminal device. The information stream is transmitted in the communication system in a form of a data packet, and a priority of the data packet may be related to a type of the information stream in the data packet. In other words, the priority of the data packet is consistent with a priority of the information stream in the data packet. The following describes a principle of transmitting an information stream based on a priority of the information stream with reference to an architecture of the communication system.

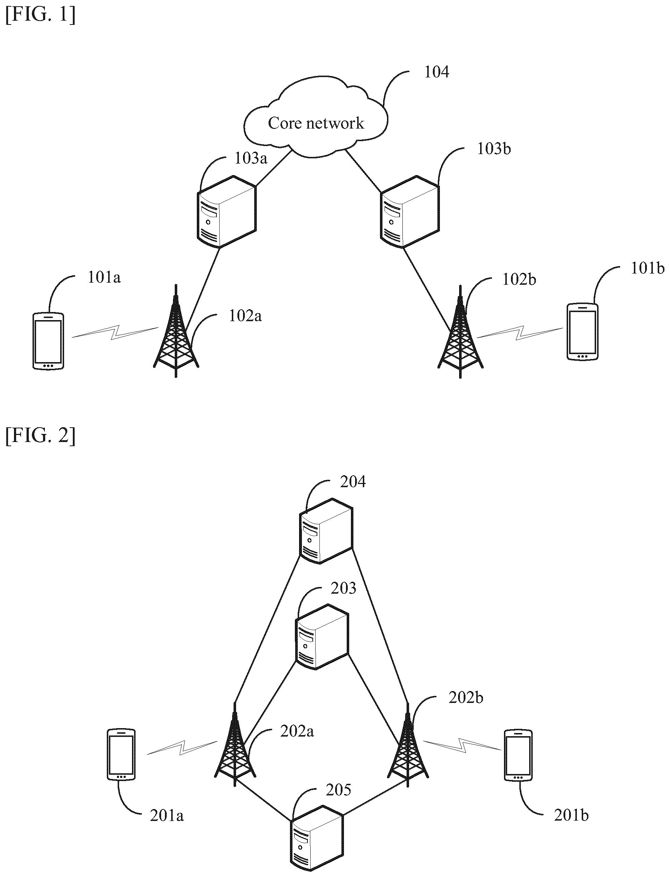

In a solution based on a priority of a data packet, a first network element may be deployed in the communication system to identify the priority of the data packet. As shown in FIG. 1, the communication system includes a terminal device 101a, a terminal device 101b, an access network device 102a, an access network device 102b, a first network element 103a, a first network element 103b, and a core network 104. The terminal device 101a is communicatively connected to the access network device 102a, the access network device 102a is communicatively connected to the first network element 103a, and the first network element 103a is communicatively connected to the core network 104. The terminal device 101b is communicatively connected to the access network device 102b, the access network device 102b is communicatively connected to the first network element 103b, and the first network element 103b is communicatively connected to the core network 104. The first network element is used as an example. After a data packet A and a data packet B arrive at the first network element 103a, the first network element 103a identifies priorities of the data packet A and the data packet B. If the priority of the data packet B is higher than the priority of the data packet A, the first network element 103a first sends the data packet B, and then sends the data packet A. A working principle of the first network element 103b is similar to that of the first network element 103a. Details are not described herein again. The core network 104 may be communicatively connected to a server that provides a service. However, in the foregoing solution based on the priority of the information stream, the first network element is deployed between the access network device and the core network, and is configured to implement network acceleration between the access network device and the core network. Therefore, it is difficult to resolve a network congestion problem between the terminal device and the access network device, and it is difficult to resolve a delay problem of an uplink information stream sent by the terminal device.

In conclusion, it may be learned that, in the solution based on an uplink bandwidth predicted by an app, when the uplink network between the terminal device and the access network device is congested, a problem of a large audio delay may be caused, resulting in audio frame freezing. In the solution based on a priority level of a data packet, when an information stream passes through the first network element between the access network device and the core network, a data packet is sent based on a priority of the data packet carrying the information stream. When a network between the terminal device and the access network device is congested, an uplink information stream of the terminal device still needs to be queued for transmission, and a delay problem still exists, resulting in audio frame freezing. Therefore, both the foregoing two solutions cannot ensure quality of audio and other information streams, and in particular, cannot ensure quality of an information stream having a high timeliness requirement.

In addition, when an allocated bandwidth is less than a required bandwidth of the information stream, or when the delay is large, a problem of a high packet loss rate may be caused, thereby affecting the quality of the information stream. For example, for an audio stream, a high packet loss rate causes audio damage and affects audio quality.

To resolve the foregoing problem, an embodiment of this application provides an uplink transmission method. In the uplink transmission method, an AP of a terminal device may determine, based on at least one second app, a quality assurance level of a protocol packet corresponding to at least one information type of each second app. The AP of the terminal device sends, to a baseband chip, the protocol packet corresponding to the at least one information type and the quality assurance level of the protocol packet corresponding to the at least one information type. The baseband chip sends information of the protocol packet corresponding to the at least one information type based on the quality assurance level of the protocol packet corresponding to the at least one information type. In this way, the first protocol packet corresponding to each of the at least one information type of each second app may be transmitted based on priority levels of different information types in different apps, and a transmission sequence of first protocol packets corresponding to information types that have different requirements for quality parameters, such as timeliness or integrity, in the different apps is coordinated. For example, a higher priority level may be set for a first protocol packet corresponding to an information type having a high timeliness requirement or a high integrity requirement (which may also be referred to as a high quality requirement). In this way, the terminal device may preferentially send the first protocol packet corresponding to the information type having the high quality requirement, so that a delay and a packet loss rate of the first protocol packet corresponding to the information type having the high quality requirement can be reduced, and quality of the first protocol packet corresponding to the information type having the high quality requirement can be better ensured.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

For ease of understanding of this application, a communication system shown in FIG. 2 is first used as an example to describe in detail a communication system to which embodiments of this application are applicable. For example, FIG. 2 is a diagram of an architecture of a communication system to which an uplink transmission method is applicable according to an embodiment of this application.

As shown in FIG. 2, the communication system may include at least one terminal device, at least one access network device, and at least one server. A communication connection may be established between the terminal device and the access network device, information may be exchanged between the terminal device and the access network device that establish the communication connection, and a communication connection may be established between the access network device and the server. For example, the terminal device may send information, for example, an audio stream or a video stream, to a network device.

For example, the at least one terminal device includes a terminal device 201a and a terminal device 201b, the at least one access network device includes an access network device 202a and an access network device 202b, and the at least one server includes a server 203 and a server 204. A communication connection may be established between the terminal device 201a and the access network device 202a, to implement information exchange between the terminal device 201a and the access network device 202a. A communication connection may be established between the terminal device 201b and the access network device 202b, to implement information exchange between the terminal device 201b and the access network device 202b. The access network device 202a may establish a communication connection to the server 203, to obtain service information from the server 203 and send the service information to the terminal device 201a, or receive service information from the terminal device 201a and send the service information to the server 203. The access network device 202b may establish a communication connection to the server 203, to obtain information from the server 203 and send the information to the terminal device 201b, or receive information from the terminal device 201b and send the information to the server 203. The terminal device 201a or the terminal device 201b may further establish a connection to the server 204, to send signaling to the server 204 or receive signaling from the server 204. For example, the signaling may be call signaling.

In addition, the at least one server may further include a server 205. The terminal device 201a or the terminal device 201b may further establish a connection to the server 205, to obtain, from the server 205, a destination address, for example, a destination internet protocol (internet protocol, IP) address and a destination port number, of a server (for example, the server 203 or the server 204) corresponding to to-be-sent information.

The access network device is a device that is located on a network side of the communication system and that has a wireless transceiver function, or a chip or a chip system that may be disposed in the device, and is configured to provide a network (for example, a cellular network) service for an electronic device. The access network device includes but is not limited to various types of base stations: a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like. Alternatively, the access network device may be a gNB or a transmission point (TRP or TP) in a 5G system, for example, a new radio (new radio, NR) system, may be an antenna panel or a group of antenna panels (including a plurality of antenna panels) of a base station in a 5G system, or may be a network node, for example, a baseband unit (BBU), a distributed unit (distributed unit, DU), or a road side unit (road side unit, RSU) having a base station function, that constitutes a gNB or a transmission point.

The foregoing server is a device having a data processing function and a data receiving and sending function, or a chip or a chip system that may be disposed in the device. For example, the server may be a signaling server, a server (such as a media server) for exchanging service information, a domain name system (domain name system, DNS) server, or a terminal router system (terminal router system, TRS) server. For example, the signaling server may include an account management server that may be configured to perform functions of registration, information maintenance, and information query of a call device. In addition, the signaling server may further include a signaling forwarding server that is configured to be responsible for transmitting call signaling such as calling, answering, and rejecting between devices. The media server may be configured to establish a route between the media server and a terminal-side device, and is responsible for forwarding audio, video, and media control data between call devices. In an RTP or RTCP framework, the media server is responsible for forwarding an RTP packet or an RTCP packet. Both the DNS server and TRS server may be used to provide an IP address and a port number of a protocol packet.

For example, the server 203 may be a server configured to exchange service information, for example, a media server; the server 204 may be a signaling server; and the server 205 may be a DNS server or a TRS server.

The terminal device is a terminal that accesses the communication system and that has a wireless transceiver function, or a chip or a chip system that may be disposed in the terminal. The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement, by using the vehicle-mounted module, the vehicle-mounted assembly, the vehicle-mounted component, the vehicle-mounted chip, or the vehicle-mounted unit that is built in the vehicle, the uplink transmission method provided in this application.

For ease of understanding of embodiments of this application, the following uses an example to describe a structure of a related terminal device in embodiments of this application.

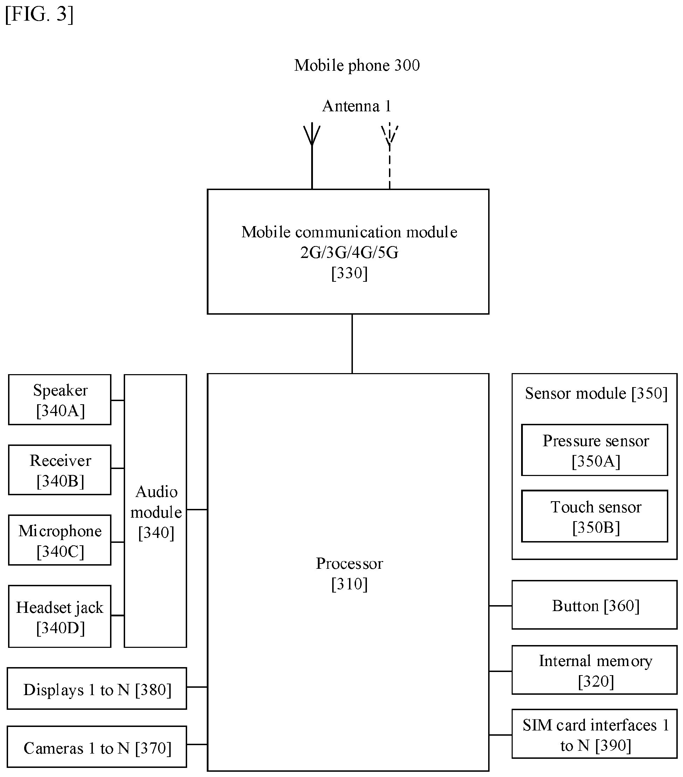

For example, the terminal device is a mobile phone. FIG. 3 is a diagram of a structure of a mobile phone according to an embodiment of this application. The mobile phone 300 may include a processor 310, an internal memory 320, an antenna 1, a mobile communication module 330, an audio module 340, a speaker 340A, a receiver 340B, a microphone 340C, a headset jack 340D, a sensor module 350, a button 360, a camera 370, a display 380, a subscriber identity module (subscriber identity module, SIM) card interface 390, and the like. The sensor module 350 may include a pressure sensor 350A, a touch sensor 350B, and the like.

It may be understood that the structure shown in this embodiment of the present invention does not constitute a specific limitation on the mobile phone 300. In some other embodiments of this application, the mobile phone 300 may include more or fewer components than those shown in the figure, or some components may be combined, or some components may be split, or there may be a different component arrangement. The components shown in the figure may be implemented by hardware, software, or a combination of software and hardware.

The processor 310 may include one or more processing units. For example, the processor 310 may include an application processor (application processor, AP), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the mobile phone 300. The controller may generate an operation control signal based on instruction operation code and a time sequence signal, to complete control of instruction fetch and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor 310 may directly invoke the instructions or the data from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (serial clock line, SCL). In some embodiments, the processor 310 may include a plurality of groups of I2C buses. The processor 310 may be separately coupled to the touch sensor 350B, a charger, a flash, the camera 370, and the like through different I2C bus interfaces. For example, the processor 310 may be coupled to the touch sensor 350B through the I2C interface, so that the processor 310 communicates with the touch sensor 350B through the I2C bus interface, to implement a touch function of the mobile phone 300.

The I2S interface may be configured to perform audio communication. In some embodiments, the processor 310 may include a plurality of groups of I2S buses. The processor 310 may be coupled to the audio module 340 through the I2S bus, to implement communication between the processor 310 and the audio module 340.

The PCM interface may also be configured to: perform audio communication, and sample, quantize, and code an analog signal.

The UART interface is a universal serial data bus, and is configured to perform asynchronous communication. The bus may be a bidirectional communication bus. The bus converts to-be-transmitted data between serial communication and parallel communication.

The MIPI interface may be configured to connect the processor 310 to a peripheral device, for example, the display 380 or the camera 370. The MIPI interface includes a camera serial interface (camera serial interface, CSI), a display serial interface (display serial interface, DSI), and the like. In some embodiments, the processor 310 communicates with the camera 370 through the CSI interface, to implement a photographing function of the mobile phone 300. The processor 310 communicates with the display 380 through the DSI interface, to implement a display function of the mobile phone 300.

The GPIO interface may be configured by software. The GPIO interface may be configured as a control signal, or may be configured as a data signal. In some embodiments, the GPIO interface may be configured to connect the processor 310 to the camera 370, the display 380, the audio module 340, the sensor module 350, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the mobile phone 300, or may be configured to transmit data between the mobile phone 300 and a peripheral device. The USB interface 130 may alternatively be configured to connect to a headset, to play audio through the headset. The interface may be further configured to connect to another electronic device, for example, an AR device.

It may be understood that an interface connection relationship between the modules shown in this embodiment of the present invention is merely an example for description, and does not constitute a limitation on the structure of the mobile phone 300. In some other embodiments of this application, the mobile phone 300 may alternatively use an interface connection manner different from that in the foregoing embodiment, or use a combination of a plurality of interface connection manners.

A wireless communication function of the mobile phone 300 may be implemented by using the antenna 1, the mobile communication module 330, the baseband processor, and the like.

The antenna 1 is configured to: transmit and receive an electromagnetic wave signal. Each antenna in the mobile phone 300 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 330 may provide a wireless communication solution that is applied to the mobile phone 300 and that includes 2G/3G/4G/5G, or the like. The mobile communication module 330 may include at least one filter, a switch, a power amplifier, a low noise amplifier (low noise amplifier, LNA), and the like.

In some embodiments, in the mobile phone 300, the antenna 1 and the mobile communication module 330 are coupled, so that the mobile phone 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 300 implements a display function by using the GPU, the display 380, the application processor, and the like. The GPU is a microprocessor for image processing, and is connected to the display 380 and the application processor. The GPU is configured to perform mathematical and geometric computation for graphic rendering. The processor 310 may include one or more GPUs that execute program instructions to generate or change displayed information.

The display 380 is configured to display an image, a video, and the like.

The mobile phone 300 may implement a photographing function by using the ISP, the camera 370, the video codec, the GPU, the display 380, the application processor, and the like.

The ISP is configured to process data fed back by the camera 370.

The camera 370 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the mobile phone 300 may include one or N cameras 370, where N is a positive integer greater than 1.

The digital signal processor is configured to process a digital signal, and may process another digital signal in addition to the digital image signal. For example, when the mobile phone 300 performs frequency selection, the digital signal processor is configured to perform Fourier transform and the like on frequency energy.

The video codec is configured to compress or decompress a digital video. The mobile phone 300 may support one or more video codecs. In this way, the mobile phone 300 may play or record videos in a plurality of coding formats, for example, moving picture experts group (moving picture experts group, MPEG)-1, MPEG-2, MPEG-3, and MPEG-4.

The internal memory 320 may be configured to store computer-executable program code. The executable program code includes instructions. The processor 310 runs the instructions stored in the internal memory 320, to implement various function applications and data processing of the mobile phone 300. The internal memory 320 may include a program storage area and a data storage area. The program storage area may store an operating system, an application required by at least one function (for example, a voice playing function or an image playing function), and the like. The data storage area may store data (for example, audio data and an address book) created during use of the mobile phone 300, and the like. In addition, the internal memory 320 may include a high-speed random access memory, or may include a nonvolatile memory, for example, at least one magnetic disk storage device, a flash memory, or a universal flash storage (universal flash storage, UFS).

The mobile phone 300 may implement an audio function, for example, music playing or recording, by using the audio module 340, the speaker 340A, the receiver 340B, the microphone 340C, the headset jack 340D, the application processor, and the like.

The audio module 340 is configured to convert digital audio information into an analog audio signal output, and is also configured to convert an analog audio input into a digital audio signal. The audio module 340 may be further configured to encode and decode an audio signal. In some embodiments, the audio module 340 may be disposed in the processor 310, or some functional modules of the audio module 340 are disposed in the processor 310.

The speaker 340A, also referred to as a "horn", is configured to convert an audio electrical signal into a sound signal. The mobile phone 300 may use the speaker 340A to play music or receive a hands-free call.

The receiver 340B, also referred to as an "earpiece", is configured to convert an audio electrical signal into a sound signal. When a call is answered or voice information is received by using the mobile phone 300, the receiver 340B may be put close to a human ear to listen to a voice.

The microphone 340C, also referred to as a "mike" or a "mic", is configured to convert a sound signal into an electrical signal. When making a call or sending a voice message, a user may make a sound by moving a human mouth close to the microphone 340C to input a sound signal to the microphone 340C. At least one microphone 340C may be disposed in the mobile phone 300. In some other embodiments, two microphones 340C may be disposed in the mobile phone 300, to collect a sound signal and further implement a noise reduction function. In some other embodiments, three, four, or more microphones 340C may alternatively be disposed in the mobile phone 300, to collect a sound signal, implement noise reduction, further identify a sound source, implement a directional recording function, and the like.

The headset jack 340D is configured to connect to a wired headset. The headset jack 340D may be a USB interface, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 350A is configured to sense a pressure signal, and can convert the pressure signal into an electrical signal. In some embodiments, the pressure sensor 350A may be disposed on the display 380. There are a plurality of types of pressure sensors 350A, such as a resistive pressure sensor, an inductive pressure sensor, and a capacitive pressure sensor. The capacitive pressure sensor may include at least two parallel plates made of conductive materials. When a force is applied to the pressure sensor 350A, capacitance between electrodes changes. The mobile phone 300 determines pressure intensity based on a change of the capacitance. When a touch operation is performed on the display 380, the mobile phone 300 detects intensity of the touch operation based on the pressure sensor 350A. The mobile phone 300 may further calculate a touch position based on a detection signal of the pressure sensor 350A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The touch sensor 350B is also referred to as a "touch panel". The touch sensor 350B may be disposed on the display 380, and the touch sensor 350B and the display 380 constitute a touchscreen, which is also referred to as a "touch screen". The touch sensor 350B is configured to detect a touch operation performed on or near the touch sensor. The touch sensor may transfer the detected touch operation to the application processor, to determine a type of a touch event. A visual output related to the touch operation may be provided by using the display 380. In some other embodiments, the touch sensor 350B may alternatively be disposed on a surface of the mobile phone 300 at a location different from that of the display 380.

The button 360 includes a power button, a volume button, or the like. The button 360 may be a mechanical button, or may be a touch button. The mobile phone 300 may receive a button input, and generate a button signal input related to a user setting and function control of the mobile phone 300.

The SIM card interface 390 is configured to connect to a SIM card. The SIM card may be inserted into the SIM card interface 390 or removed from the SIM card interface 390, to implement contact with or separation from the mobile phone 300. The mobile phone 300 may support one or N SIM card interfaces, where N is a positive integer greater than 1. The SIM card interface 390 may support a nano-SIM card, a micro-SIM card, a SIM card, and the like. A plurality of cards may be inserted into a same SIM card interface 390 at the same time. The plurality of cards may be of a same type or different types. The SIM card interface 390 is also compatible with different types of SIM cards. The SIM card interface 390 is also compatible with an external memory card. The mobile phone 300 interacts with a network by using the SIM card, to implement functions such as calling and data communication. In some embodiments, the mobile phone 300 uses an eSIM, namely, an embedded SIM card. The eSIM card may be embedded in the mobile phone 300, and cannot be separated from the mobile phone 300.

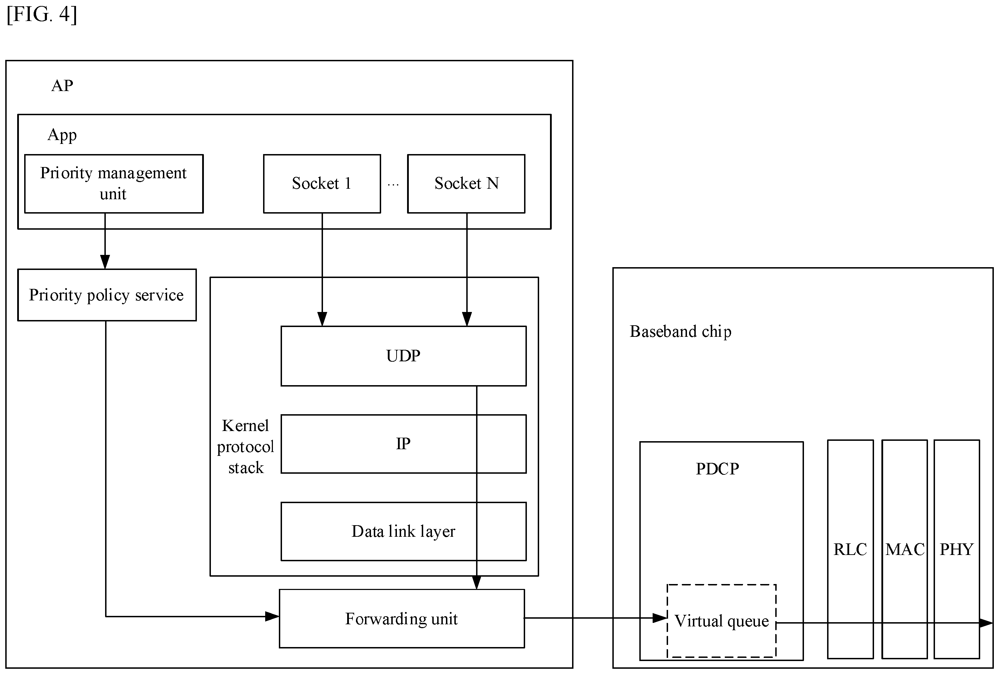

As shown in FIG. 4, the application processor is connected to a baseband processor (which may also be referred to as a modem, a modem core (modem core), or a baseband chip, and is referred to as a baseband chip in the following embodiments). The application processor may include functions configured to implement the following functional modules: an application (application, app) priority policy service, a forwarding unit, and a kernel protocol stack. The app includes a priority management unit and at least one socket (for example, a socket 1 to a socket N, where N is an integer greater than 1). The baseband chip may include functions for implementing the following functional modules: a packet data convergence protocol (packet data convergence protocol, PDCP) layer, a radio link control (radio link control, RLC) layer, a media access control (medium access control, MAC) layer, and a physical layer (physical layer, PHY).

For example, the kernel protocol stack may include: a user datagram protocol (user datagram protocol, UDP) layer, an IP layer, and a data-link layer (data-link layer). For specific implementation of the kernel protocol stack, refer to an implementation principle of the kernel protocol stack in the conventional technology. Details are not described herein. The priority management unit may obtain priority policy information of at least one app, and send the priority policy information of the at least one app to the priority policy service. The priority policy service may be used to filter the priority policy information of the at least one app, and send the filtered priority policy information of the app to the forwarding unit.

Information that needs to be sent by a mobile phone may enter the kernel protocol stack through an interface corresponding to the information. The kernel protocol stack processes the information to obtain a protocol packet corresponding to the information, and sends the protocol packet to the forwarding unit. The forwarding unit determines, based on the received priority policy information of the app, a quality assurance level of each protocol packet in the forwarding unit, and sends the protocol packet and the quality assurance level corresponding to the protocol packet to the baseband chip. The PDCP layer sends the protocol packet to the RLC layer based on a priority of the protocol packet. The protocol packet is sequentially processed by the RLC layer, the MAC layer, and the PHY layer, and then sent through an air interface.

A four-layer software architecture of an Android (Android) system is used as an example. The priority management unit and the socket may correspond to an application layer, the priority policy service may correspond to an application framework layer, and a kernel protocol may correspond to a kernel layer and a system library.

It should be noted that the uplink transmission method provided in this embodiment of this application is applicable to the terminal device in the communication system shown in FIG. 2. For a specific implementation, refer to the following method embodiment. Details are not described herein.

It should be noted that the solution in this embodiment of this application may alternatively be applied to another communication system, and a corresponding name may alternatively be replaced with a name of a corresponding function in the another communication system.

It should be understood that FIG. 2 is merely a simplified diagram of an example for ease of understanding. The communication system may further include another network device and/or another terminal device that are/is not shown in FIG. 2.

In the following embodiments, an example in which the terminal device (the terminal device 201a or the terminal device 201b) is a mobile phone is used to describe the uplink transmission method provided in this embodiment of this application.

In a possible design scheme, a quality assurance function may be enabled on the mobile phone by default. For example, after the mobile phone is powered on, the quality assurance function of the mobile phone is autonomously enabled. In this case, in all apps on the mobile phone, an app that has information having a high quality requirement is a first app.

The quality requirement includes the following one or more pieces of the information: a timeliness requirement or an integrity requirement.

When the quality assurance function of the mobile phone is enabled, the mobile phone may preferentially send information having a high quality requirement in information of an app, to ensure quality of the information having the high quality requirement. It may be understood that the quality assurance function may alternatively have another name. This is not limited in embodiments of this application.

In another possible design scheme, the mobile phone may enable a quality assurance function based on signal quality.

For example, the mobile phone may enable the quality assurance function when the signal quality is less than or equal to a first quality threshold. For example, when the mobile phone is in an audio and video call, if the mobile phone detects that signal quality is less than or equal to the first quality threshold, the terminal device may enable the quality assurance function. In this case, in all apps on the mobile phone, an app that has information having a high quality requirement is a first app.

The signal quality may be determined based on one or more of the following: a received signal strength indication (received signal strength indication, RSSI), or reference signal received quality (reference signal received quality, RSRQ). The RSRQ is used as an example, and strength of the first quality threshold may be 10 decibels (decibels, dB).

In still another possible design scheme, a "quality assurance" option (which may also be referred to as a switch) may be set in a drop-down menu 501 of the mobile phone. The mobile phone may receive a first operation performed by a user on the "quality assurance" option, and enable a quality assurance function of the mobile phone in response to the first operation.

In a possible scenario, after the user enables the quality assurance function of the mobile phone, in all apps on the mobile phone, an app that has information having a high timeliness requirement is a first app.

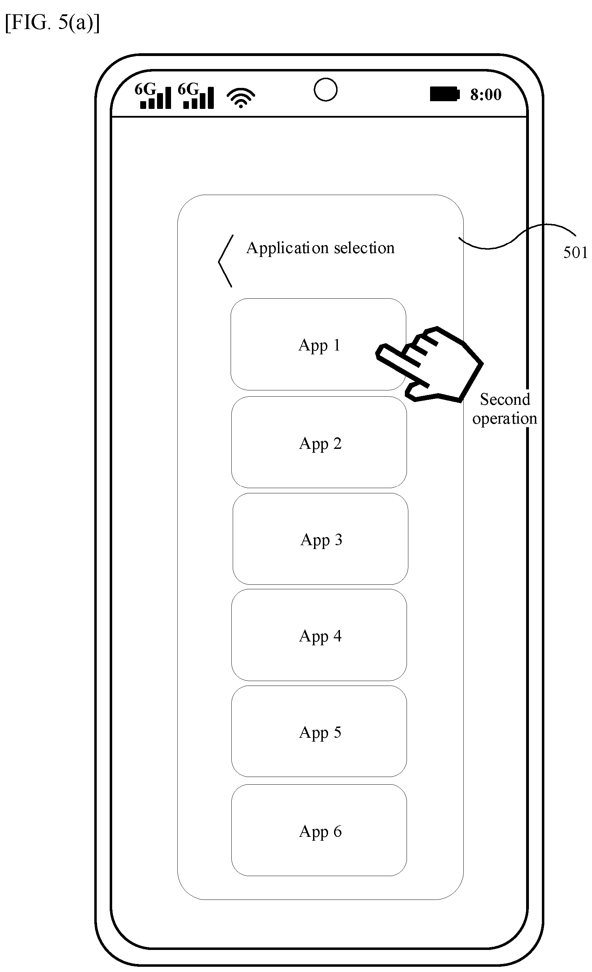

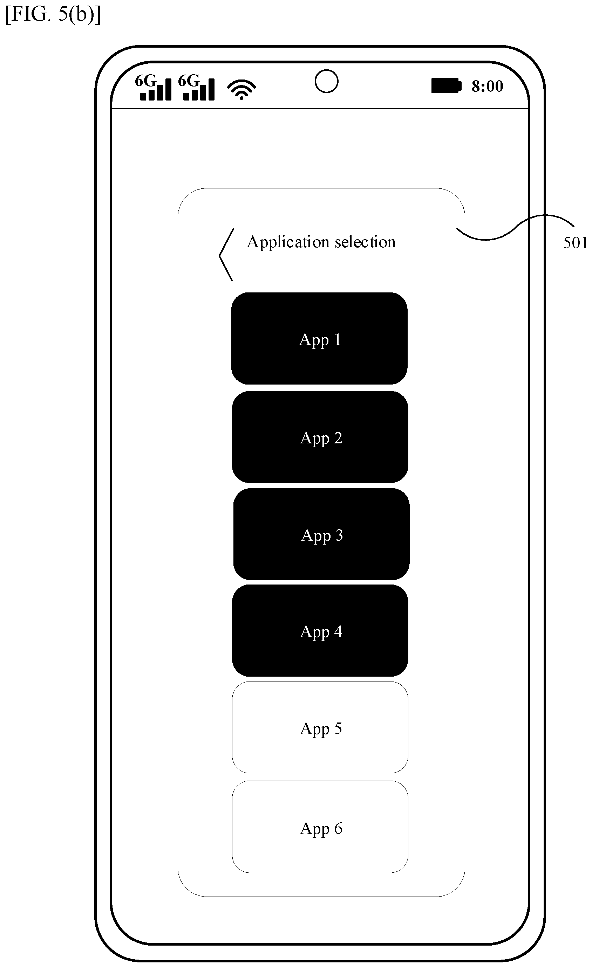

In another possible scenario, as shown in FIG. 5(a), after the user manually enables the quality assurance function of the mobile phone, an "application selection" tab 501 may pop up on a mobile phone interface, and the "application selection" tab 501 includes options corresponding to apps. The user selects a corresponding app from the options corresponding to the apps, and the selected app is the first app. Generally, the first app selected by the user is an app having a high quality requirement. The mobile phone may receive a second operation performed by the user on the options corresponding to the apps, and add, in response to the second operation, an app selected in the second operation to a quality assurance mode. For example, in the "application selection" tab 501, the displayed apps include an app 1 to an app 6. If the user selects the app 1 to an app 4, an interface of the "application selection" tab 501 is shown in FIG. 5(b). In this case, the app 1 to the app 4 are first apps.

When the quality assurance function of the mobile phone is enabled, for each app on the mobile phone, the app may implement a quality assurance function of the app.

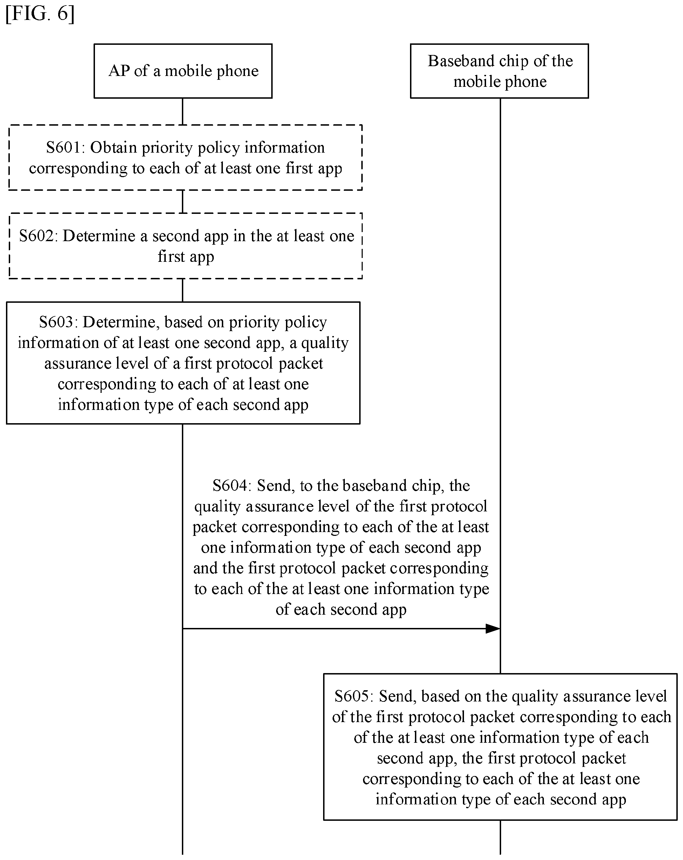

When the mobile phone has the quality assurance function, the mobile phone may perform the following steps S601 to S605. The following provides descriptions with reference to specific steps shown in FIG. 6.

S601: An application processor AP of the mobile phone obtains priority policy information corresponding to each of at least one first app.

Priority policy information corresponding to one first app indicates a priority level of at least one of information types of the first app.

In this case, the priority policy information may include a correspondence between information used to identify an information type and a priority level. The priority level of the at least one of the information types of the first app is indicated by the correspondence between information used to identify an information type and a priority level. Different information types correspond to different priority levels.

At least one of information types of a first candidate app may be each information type having a high quality requirement in the information types of the first candidate app. In the following embodiments, unless otherwise specified, the at least one of the information types of the first app includes an information type having a quality requirement, to be specific, an information type having a high quality requirement in the information types of the first app.

In some possible design schemes, priority policy information corresponding to one first app may indicate an effective condition of a quality assurance function of the first app. For example, the effective condition includes: being effective when an app is in a foreground or in a background; or being effective when an app is in a foreground.

In this case, priority policy information corresponding to one first app may indicate information used to identify an effective condition of a quality assurance function of the first app.

It may be understood that, when the effective condition includes: being effective when an app is in a foreground, the quality assurance function of the app is ineffective if the app is in a background.

That an app is in a foreground means that the app is run in the foreground. That an app is in a background means that the app is run in the background.

The effective condition of the quality assurance function of the first app may also be referred to as an effective condition corresponding to the first app. If a running status of the first app meets the effective condition, the quality assurance function of the first app takes effect. If a running status of the first app does not meet the effective state, the quality assurance function of the first app does not take effect. That the quality assurance function takes effect means that the mobile phone may determine a sending sequence of the first app based on the priority level indicated by the priority policy information of the first app. That the quality assurance function does not take effect means that the mobile phone does not determine a sending sequence of the first app based on the priority level indicated by the priority policy information of the first app.

In this way, data of different information types of an app may be transmitted based on a running status of the app, so that quality of a protocol packet corresponding to an information type having a high quality requirement can be better ensured.

An information type is a classification category of an information stream, and there may be a plurality of classification manners of the information type. For example, the information type may be classified based on a specific form, a format, a protocol, or the like of content included in the information stream, and may be, for example, classified into a video type, an audio type, a text type, or another type. The information type may alternatively be classified based on a quality requirement of the information stream, and information streams having different quality requirements may correspond to different information types.

For example, the quality requirement of the information type may be determined based on one or more of the following: a timeliness requirement or an integrity requirement. An information type having a high timeliness requirement or a high integrity requirement also has a high quality requirement. For example, information related to user login has high importance, so that a quality requirement of this information type is high. For another example, an audio stream and a video stream have high timeliness requirements, and a timeliness requirement of the audio stream is higher than that of the video stream. Therefore, the audio stream is of an information type, the video stream is of an information type, and a quality requirement of the audio stream is higher than that of the video stream. For still another example, call signaling has a high integrity requirement, so that this information type of call signaling has a high quality requirement.

Because an information stream usually has corresponding quintuple information, different information streams may be identified by using quintuplets. Therefore, in the priority policy information, an information type of information may also be identified based on one or more pieces of information of quintuple information. When the first app is an independent app, in the priority policy information, an information type of the first app may be identified by using one or more pieces of information in a quintuplet. In this way, a manner of identifying an information type may be more flexible, an app adaptation or modification workload is reduced, and applicability is improved. In this case, the priority policy information includes the priority level and at least one piece of information in a quintuplet corresponding to the priority level. The quintuplet includes: a mobile phone IP address (namely, a source IP address), a mobile phone port number (namely, a source port number), a protocol type, a server IP address (namely, a destination IP address), and a service port number (namely, a destination port number). The following describes identification information of an information type in the priority policy information with reference to a scenario 1 and a scenario 2.

Scenario 1: In a scenario in which it is difficult to obtain a mobile phone IP address and a mobile phone port number, or in a scenario in which there are too many server IP address lists and it is difficult to maintain the lists, an information type may be represented by using a server IP address, a server port number, and a protocol type, or may be represented based on a server port number and a protocol type. For example, for an HTTP request (or a hypertext transfer protocol over secure socket layer (hypertext transfer protocol over secure socket layer, HTTPS) request) based on a quick UDP internet connection (quick UDP internet connection, QUIC) protocol or a hypertext transfer protocol (hypertext transport protocol, HTTP), an information type may be identified by using a server IP address, a server port number, and a protocol type, or may be identified based on a server port number and a protocol type. In this case, information types of information having a same server IP address, a same server port number, and a same protocol type are the same, or information types of information having a same server port number and a same protocol type are the same.

In this case, the mobile phone may query a server IP address based on a domain name system DNS. For example, it is assumed that the server 204 in FIG. 2 is a DNS server. In this case, the mobile phone may send a domain name query request to the DNS server. After receiving the domain name query request, the DNS server sends, to the mobile phone based on the domain name query request, a server IP address and a server port number that correspond to the domain name query request.

Scenario 2: When it is easy for an app on the mobile phone to obtain a socket (socket) handle, the mobile phone may identify an information type based on information in a quintuplet obtained by a socket. For example, in a scenario in which information is transmitted through a TCP-based long-lived connection channel, an information type may be determined by using a server IP address, a server port number, a protocol type, and a mobile phone port number. In this case, information types of information having a same IP address, a same server port number, a same protocol type, and a same mobile phone port number are the same.

In this case, the mobile phone may obtain a server IP address and a server port number from a TRS server. For example, it is assumed that the server 204 in FIG. 2 is a TRS server. In this case, the mobile phone may send a route query request to the TRS server. After receiving the route query request, the TRS server sends, to the mobile phone based on the route query request, a server IP address and a server port number that correspond to the route query request.

For example, the information used to identify the effective condition may be implemented by using one bit. For example, when the bit identifying the effective condition is "1", the effective condition is: being effective when the first app is in the foreground or the background. When the bit indicating the effective condition is "0", the effective condition is: being effective when the first app is in the foreground.

The priority policy information may be preconfigured in the terminal device. Alternatively, the priority policy information may be determined by the app based on a requirement of information to be sent by the app, for example, a timeliness requirement or an integrity requirement. Alternatively, the priority policy information may be set by a user. Alternatively, the priority policy information may be sent by another network device or terminal device to the mobile phone. This is not limited in embodiments of this application. The first app may be an independent app, to be specific, an app that can autonomously perform network interaction, for example, a WeChat app, a Weibo app, or an Alipay app. Alternatively, the first app may be an application that needs to rely on another platform, for example, an app, to perform network interaction, to be specific, an application for which network interaction is completed by a content provider, for example, a mini program in a social application or an application like a browser.

S601 is described below by using an example with reference to the first app.

For example, in S601, the AP of the mobile phone may obtain the priority policy information of each of the at least one first app through a priority management unit.

It is assumed that the at least one first app in the mobile phone includes an app 1 to an app 4. In this case, the mobile phone may obtain priority policy information of each app in the app 1 to the app 4. The following provides descriptions with reference to priority policy information of the app 1 to the app 4.

The app 1 is an app that has an audio and video call function, for example, a WeChat app. Information transmitted in a running process of the app 1 includes the following types: a signaling stream 1, an audio stream, and a video stream. Priority policy information corresponding to the app 1 may indicate priority levels of protocol packets that are separately used to carry the signaling stream 1, the audio stream, and the video stream, and an effective condition corresponding to the app 1.

For example, in the priority policy information, a priority level of a protocol packet carrying the signaling stream 1 is 5, a priority level of a protocol packet carrying the audio stream is 4, a priority level of the video stream is 3, and the effective condition corresponding to the app 1 includes: being effective when an app is in a foreground or in a background.

An app 2 is a mini program. For the app 2, priority policy information indicates that a priority level of a protocol packet of the app 2 is 6, and an effective condition corresponding to the app 2 includes: being effective when an app is in a foreground.

An app 3 is an app that has a data publishing function, for example, a Weibo app. If information transmitted in a running process of the app 3 includes a signaling stream 2 and published information. Priority policy information of the app 3 indicates that a priority level of the signaling stream 2 is 5, a quality level of a protocol packet corresponding to the published information is 2, and an effective condition corresponding to the app 3 includes: being effective when an app is in a foreground.

The app 4 is an app that has a data upload function, for example, a cloud disk app. Information sent by the app 4 is uploaded information to be stored in a cloud disk. Priority policy information of the app 4 indicates that a priority level of the uploaded information is 1, and an effective condition corresponding to the app 4 includes: being effective when an app is in a foreground.

It may be understood that, "server" in the server IP address and the server port number is a server that provides a service for the mobile phone to transmit information, for example, the server 203 in FIG. 2. The server may be a signaling server, or may be a media server. If information to be sent by the first app is signaling, the server is a signaling server. If information to be sent by the first app is data, the server is a media server.

It may be understood that, for a first app of a mini program or browser type, a priority level of a protocol packet may be the highest among protocol packets of all apps, and an effective condition corresponding to the first app is: being effective when an app is in a foreground.

That an app is in a foreground may also be referred to as that a focus is located in a window of the app. In this case, the app may also be referred to as a focus app.

S602: The AP of the mobile phone determines a second app in the at least one first app.

In a possible design scheme, the second app may be a running first app in the at least one first app.

For example, if the first app includes the app 1 to the app 4, and the app 1 and the app 2 are running, the second app includes the app 1 and the app 2.

Optionally, if the priority policy information may indicate the effective condition of the quality assurance function of the app, a running status of the second app meets the effective condition of the quality assurance function. In other words, the second app may be a first app whose running status meets the effective condition of the quality assurance function in the first app. In this case, S602 may include: The AP of the mobile phone may determine the second app in the at least one first app based on an effective condition and a running status that correspond to each of the at least one first app.

The running status may include running in the foreground or running in the background.

For example, the AP of the mobile phone may determine, as the second app, a first app whose running status meets the effective condition in the at least one first app.

For example, the first app includes the app 1 to the app 3. It is assumed that an effective condition corresponding to the app 1 includes: being effective when an app is run in a foreground or in a background. If the app 1 is run in the background, a running status of the app 1 meets the effective condition corresponding to the app 1. It is assumed that an effective condition corresponding to the app 2 includes: being effective when an app is in a foreground. If the app 2 is run in the foreground, a running status of the app 2 meets the effective condition corresponding to the app 2. An effective condition corresponding to the app 3 includes: being effective when an app is in a foreground. If the app 3 is run in the background, a running status of the app 3 does not meet the effective condition corresponding to the app 3. In this way, the AP on a mobile phone side may determine that the second app includes the app 1 and the app 2.

In this case, the second app may be an app whose running status meets the effective condition in all first apps running on the mobile phone.

Alternatively, optionally, to reduce impact of a malicious or low-quality app on communication in the terminal device, better ensure quality of information having a high quality requirement, and improve system robustness, in this embodiment of this application, the AP of the mobile phone may check quality assurance permission of the first app, to select an app having quality assurance permission. In this case, the second app is an app having quality assurance permission. For example, S602 may include: The AP of the mobile phone may determine the second app in the at least one first app based on the effective condition and the running status that correspond to each of the at least one first app, and whether the first app has the quality assurance permission.

In this case, the second app may be a first app having quality assurance permission and whose running status meets the effective condition in all first apps running on the mobile phone.

For example, S602 may specifically include step 6.1 and step 6.2.

Step 6.1: The AP of the mobile phone determines, from the at least one first app, a first app having quality assurance permission.

For example, authorization configuration information may be preconfigured in the mobile phone, and the authorization configuration information includes identification information of all apps having quality assurance permission. If identification information of a first app is in the authorization configuration information, the first app has quality assurance permission.

For example, with reference to the app 1 to the app 4, it is assumed that authorization information preconfigured in the mobile phone includes identification information of the app 1 to the app 3, the AP of the mobile phone may determine that the app 1 to the app 3 are apps that have quality assurance permission in the at least one first app, and that the app 4 is a first app that does not have quality assurance permission.

Alternatively, the AP of the mobile phone may obtain authorization indication information from a first app, and the authorization indication information indicates whether the app has quality assurance permission (which may also be referred to as a permission (permission) item). In this way, the AP of the mobile phone may determine, based on the authorization indication information of each first app, whether the first app has the quality assurance permission. Authorization indication information may indicate whether an app is an app that has been authenticated by a system vendor, or an app that has a signature provided by an application publishing platform may be considered as an app having quality assurance permission. Correspondingly, the authorization indication information may be information indicating whether the app is an app that has been authenticated by the system vendor, or an app that has a signature provided by the application publishing platform. In this case, the AP of the mobile phone may determine, in the at least one first app, that an app whose authorization indication information indicates that the app has been authenticated by the system vendor, or an app that has a signature provided by the application publishing platform is an app having quality assurance permission in the first app. For example, with reference to the app 1 to the app 4, it is assumed that the AP of the mobile phone obtains authorization indication information of each of the app 1 to the app 4, the authorization indication information of the app 1 to the app 3 indicates that the app 1 to the app 3 have quality assurance permission, and the authorization indication information of the app 4 indicates that the app 4 does not have quality assurance permission. In this case, the AP of the mobile phone may determine that the app 1 to the app 3 are apps that have quality assurance permission in the at least one first app, namely, the second app, and the app 4 is a first app that does not have quality assurance permission.

Step 6.2: The AP of the mobile phone determines a first app whose running status meets an effective condition in the first app having the quality assurance permission as the second app.

For example, when the effective condition corresponding to the first app having the quality assurance permission is: being effective when an app in a foreground, the first app having the quality assurance permission may be determined as the second app when the first app having the quality assurance permission is in the foreground. When the effective condition corresponding to the first app having the quality assurance permission is: being effective when an app is in a foreground or in a background, the first app is determined as the second app when the first app is in a running state. In this way, a usage scenario of the user can be more accurately identified.

For example, the app 1 to the app 3 are all apps having quality assurance permission. The app 1 is run in the background, and a running status of the app 1 meets an effective condition corresponding to the app 1. The app 2 is in the foreground, and a running status of the app 2 meets an effective condition corresponding to the app 2. The app 3 is in the background, and a running status of the app 3 does not meet an effective condition corresponding to the app 3. In this way, the AP of the mobile phone may determine the app 1 and the app 2 as the second app.

For example, S602 may be implemented by a priority policy service in the AP of the mobile phone. In this case, before S602, the method provided in FIG. 6 may further include: The priority management unit sends priority policy information of the at least one first app to the priority policy service. Correspondingly, the priority policy service receives the priority policy information of the at least one first app from the priority management unit.

S603: The AP of the mobile phone determines, based on priority policy information of at least one second app, a quality assurance level of a first protocol packet corresponding to each of at least one information type of each second app. The priority level information of the second app includes a priority level of each of the at least one information type of the second app. The at least one information type of the second app is an information type having a high quality requirement.

In embodiments of this application, unless otherwise specified, the at least one information type of the second app includes an information type having a quality requirement, to be specific, an information type having a high quality requirement in the information types of the second app.

For example, S603 may include: The AP determines, based on the priority level corresponding to each of the at least one information type of each second app, the quality assurance level of the first protocol packet corresponding to each of the at least one information type of each second app.

The quality assurance level of the first protocol packet is related to the priority level of the information type corresponding to the first protocol packet. A higher priority level of the first protocol packet indicates a higher quality assurance level of the first protocol packet. A lower priority level of the first protocol packet indicates a lower quality assurance level of the first protocol packet.

The following further describes S603 with reference to step 6.3 to step 6.5.

Step 6.3: The AP of the mobile phone determines one or more pieces of information of quintuple information of protocol packets of all apps running in the mobile phone.

The protocol packet is used to carry information of the app, and information types of information carried in one protocol packet are the same (or in other words, one protocol packet corresponds to one information type).

For example, the AP of the mobile phone may parse the protocol packets of all apps running in the mobile phone, to obtain one or more pieces of information of quintuple information of each protocol packet.

For example, the AP of the mobile phone may obtain all information that belongs to the quintuple information in the protocol packet.

Step 6.4: The AP of the mobile phone determines, based on identification information of the information type in the priority policy information corresponding to each second app and one or more pieces of information of the quintuple information of the protocol packet, the first protocol packet corresponding to the at least one information type of each second app.

If the one or more pieces of information of quintuple information that is obtained by the AP and that is of one protocol packet include identification information of one information type, the protocol packet corresponds to the information type.

For example, identification information of an information type 1 includes a server IP address 10.100.100.102 and a service port number 443. If a server IP address is 10.100.100.102 and a service port number is 443 in quintuple information of a protocol packet A, an information type corresponding to the first protocol packet A is the information type 1.

Step 6.5: The AP of the mobile phone determines, based on the first protocol packet corresponding to the at least one information type of each second app and the priority level corresponding to the at least one information type of each second app, the quality assurance level of the first protocol packet corresponding to each of the at least one information type of each second app.

It may be understood that the quality assurance level of each first protocol packet corresponding to a same information type is the same.

For example, the quality assurance level may be a priority level.

In addition, S603 may further include step 6.6: The mobile phone determines a quality assurance level of each protocol packet (namely, a second protocol packet) other than the first protocol packet corresponding to each of the at least one information type of each second app in all the apps.

For example, in protocol packets in all the apps, a quality assurance level of a second protocol packet other than the first protocol packet may be lower than a quality assurance level of any first protocol packet by default.

The quality assurance level of the first protocol packet may be determined based on the information type corresponding to the first protocol packet and the running status of the second app.

The following uses examples for description with reference to that apps currently running on the mobile phone include the app 1 to the app 4.

Priority policy information of the app 1 indicates that a priority level of a signaling stream 1 is 5, and an effective condition corresponding to the app 1 includes: being effective when an app is in a foreground or in a background.

The app 2 is a mini program. For the app 2, priority policy information indicates that all information of the app 2 corresponds to a same information type, and a priority level of the information type is the highest in information of all the apps when the app 2 is in a foreground. An effective condition corresponding to the app 2 includes: being effective when an app is in a foreground.

Priority policy information of the app 3 indicates that a priority level of a signaling stream 2 is 5, and a priority level of a text stream is 2. An effective condition corresponding to the app 3 includes: being effective when an app is in a foreground.

Priority policy information of the app 4 indicates that a priority level of uploaded information is 1, and an effective condition corresponding to the app 4 includes: being effective when an app is in a foreground.

Example 1: It is assumed that, on the mobile phone, the app 1 is run in a foreground, and the app 2 to the app 4 all run in a background. In this case, the second app is the app 1. The AP of the mobile phone may determine, based on a priority level of an audio stream of the AAP 1, a priority level of a video stream of the AAP 1, and the effective condition corresponding to the app 1, that a quality assurance level of a first protocol packet corresponding to the audio stream of the app 1 is higher than a quality assurance level of a first protocol packet corresponding to the video stream of the app 1. For example, the quality assurance level of the first protocol packet corresponding to the audio stream of the app 1 may be a priority level of the audio stream, namely, 4; and the quality assurance level of the first protocol packet corresponding to the video stream of the app 1 is a priority level of the video stream, namely, 3.

The second protocol packet includes protocol packets corresponding to all information of the app 2, protocol packets corresponding to each of the signaling stream 2 and the text stream of the app 3, and a protocol packet corresponding to the uploaded information of the app 4, and a priority level of the second protocol packet may be 2, 1, or 0.

Example 2: It is assumed that, on the mobile phone, the app 1 is run in a background, and the app 2 is run in a foreground. In this case, the second app includes the app 1 and the app 2. The AP of the mobile phone may determine, based on a priority level of an audio stream of the AAP 1, a priority level of a video stream of the AAP 1, the effective condition corresponding to the app 1, a priority level of the information of the app 2, and the effective condition corresponding to the app 2, that a quality assurance level of a first protocol packet corresponding to the information of the app 2 is higher than a quality assurance level of a first protocol packet corresponding to the audio stream of the app 1, and that the quality assurance level of the first protocol packet corresponding to the audio stream of the app 1 is higher than a quality assurance level of a first protocol packet corresponding to the video stream of the app 1. For example, in this case, it may be determined as 6, the quality assurance level of the first protocol packet corresponding to the audio stream of the app 1 may be determined as 4, and the quality assurance level of the first protocol packet corresponding to the video stream of the app 1 may be determined as 3.

The second protocol packet includes protocol packets corresponding to each of the signaling stream 2 and the text stream of the app 3, and a protocol packet corresponding to the uploaded information of the app 4, and a priority level of the second protocol packet may be 3, 2, 1, or 0.

Example 3: It is assumed that, on the mobile phone, the app 1, the app 2, and the app 4 all run in a background, and the app 3 is run in a foreground. In this case, the second app includes the app 1 and the app 3. The AP of the mobile phone may determine, based on a priority level of an audio stream of the AAP 1, a priority level of a video stream of the AAP 1, the effective condition corresponding to the app 1, the app 1 being in the foreground, a priority level of information of the app 3, and the app 3, that a quality assurance level of a first protocol packet corresponding to information of the app 2 is higher than a quality assurance level of a protocol packet corresponding to the audio stream of the app 1, and that the quality assurance level of the first protocol packet corresponding to the audio stream of the app 1 is higher than a quality assurance level of a first protocol packet corresponding to the video stream of the app 1. For example, the quality assurance level of the first protocol packet corresponding to the information of the app 2 is 6, the quality assurance level of the first protocol packet corresponding to the audio stream of the app 1 may be 4, and the quality assurance level of the first protocol packet corresponding to the video stream of the app 1 is 3.

The second protocol packet includes protocol packets corresponding to all information of the app 2 and a protocol packet corresponding to uploaded information of the app 4, and a priority level of the second protocol packet may be 2, 1, or 0.

For example, S603 may be implemented by the priority policy service in the AP of the mobile phone. In addition, the AP of the mobile phone may identify a protocol packet carrying information of an app, to obtain an information type corresponding to the protocol packet.

S604: The AP of the mobile phone sends, to the baseband chip, the quality assurance level of the first protocol packet corresponding to each of the at least one information type of each second app and the first protocol packet corresponding to each of the at least one information type of each second app.

The quality assurance level of the first protocol packet corresponding to each of the at least one information type of each second app and the first protocol packet corresponding to each of the at least one information type of each second app may be sent together or separately. In other words, the quality assurance level of the first protocol packet corresponding to each of the at least one information type of each second app and the first protocol packet corresponding to each of the at least one information type of each second app may be carried in one piece of information, or may be carried in different pieces of information.

Optionally, in addition, when S703 further includes step 6.6, S604 may further include step 6.7. Step 6.7: The AP of the mobile phone sends the second protocol packet to the baseband chip.

Further, S604 may further include: The AP of the mobile phone sends the quality assurance level of the second protocol packet to the baseband chip.

Descriptions are provided with reference to the app 1 and the app 4. It is assumed that the mobile phone is configured with the app 1 and the app 4, and the app 1 to the app 3 are the second app. The AP of the mobile phone sends, to the baseband chip, a first protocol packet corresponding to at least one information type of each app in the app 1 to the app 3, a quality assurance level of the first protocol packet corresponding to the at least one information type of each app in the app 1 to the app 3, the second protocol packet, and the quality assurance level of the second protocol packet.

For example, S604 may be implemented by a forwarding unit in the AP of the mobile phone. If S603 is implemented by the priority policy service, in this case, before S604, the method provided in FIG. 6 may further include: The priority policy service in the AP of the mobile phone sends priority policy information of an app having quality assurance permission to the forwarding unit. Correspondingly, the forwarding unit receives the priority policy information of the app having the quality assurance permission from the priority policy service in the AP of the mobile phone.

In addition, the forwarding unit may further receive a protocol packet that is of the app and that is obtained through processing performed by a kernel protocol stack.

S605: The baseband chip of the mobile phone sends, based on the quality assurance level of the first protocol packet corresponding to each of the at least one information type of each second app, the first protocol packet corresponding to each of the at least one information type of each second app.

For example, the baseband chip of the mobile phone may establish a virtual queue, and store each protocol packet based on the quality assurance level and a sequence of receiving the protocol packets by the baseband chip of the mobile phone. Then, the protocol packets are sent based on the virtual queue.

For example, the baseband chip of the mobile phone may establish the virtual queue by using a PDCP layer.

In a possible design scheme, there may be a plurality of virtual queues. In this case, protocol packets of each quality assurance level may correspond to one virtual queue. For example, first protocol packets of each quality assurance level may correspond to one virtual queue. If S604 further includes step 6.7, S605 may further include: The baseband chip of the mobile phone sends the second protocol packet based on the quality assurance level of the second protocol packet. In this case, the second protocol packet may further correspond to one virtual queue.

For example, in a process of sending protocol packets, the baseband chip may sequentially send protocol packets in each virtual queue in descending order of priorities.

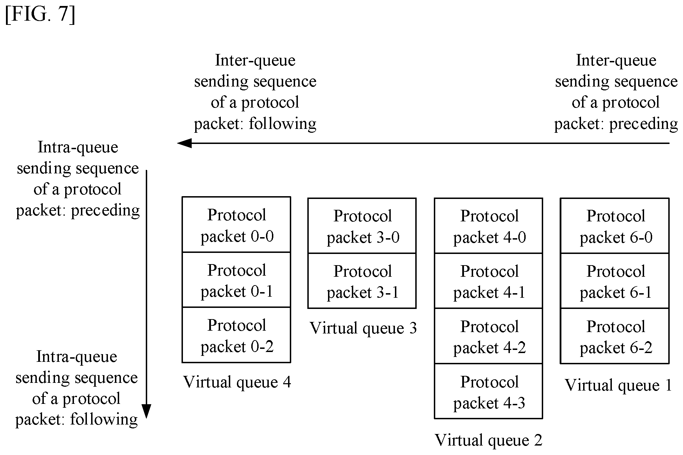

For example, for the foregoing case 3, as shown in FIG. 7, the quality assurance level 6, the quality assurance level 4, the quality assurance level 3, and the quality assurance level 0 sequentially correspond to a virtual queue 1 to a virtual queue 4. Protocol packets corresponding to the quality assurance level 6 include a protocol packet 6-0 to a protocol packet 6-2, and these protocol packets are stored in the virtual queue 1. Protocol packets of the quality assurance level 4 include a protocol packet 4-0 to a protocol packet 4-3, and these protocol packets are stored in a virtual queue 2. Protocol packets of the quality assurance level 3 include a protocol packet 3-0 and a protocol packet 3-1, and these protocol packets are stored in a virtual queue 3. Protocol packets of the quality assurance level 0 include a protocol packet 0-0 to a protocol packet 0-2, and these protocol packets are stored in a virtual queue 4. The baseband chip of the mobile phone may first send the protocol packet 6-0 to the protocol packet 6-2, then send the protocol packet 4-0 to the protocol packet 4-3, then send the protocol packet 3-0 and the protocol packet 3-1, and finally send the protocol packet 0-0 to the protocol packet 0-2.

In a possible design scheme, there may be one virtual queue. In this case, positions of protocol packets of a same quality assurance level are consecutive in the virtual queue. In the virtual queue, protocol packets are stored in descending order of quality assurance levels, and packets of a same priority are stored in a time sequence.

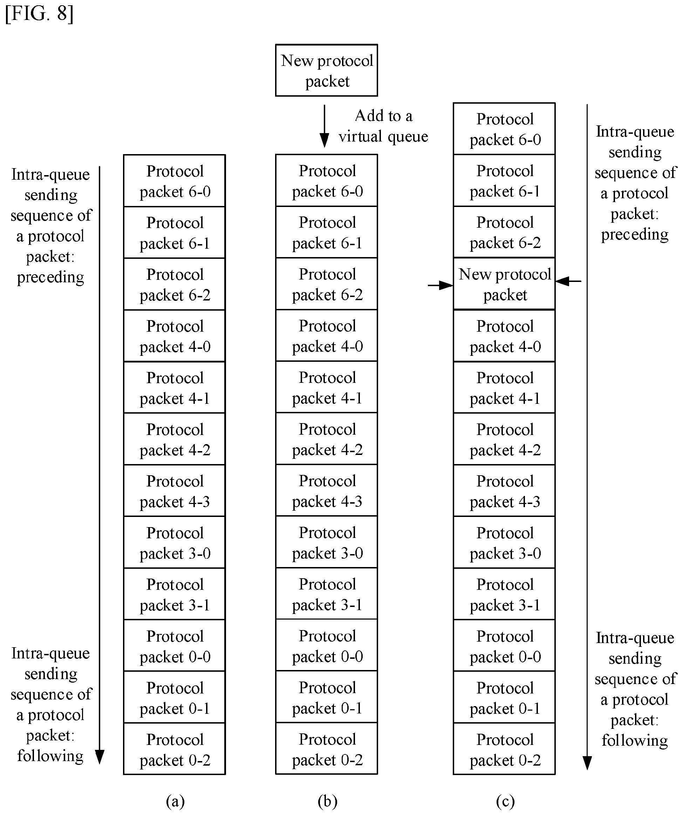

For example, for the foregoing case 3, as shown in (a) in FIG. 8, the quality assurance level 6, the quality assurance level 4, the quality assurance level 3, and the quality assurance level 0 correspond to a same virtual queue. Protocol packets corresponding to the quality assurance level 6 include a protocol packet 6-0 to a protocol packet 6-2, protocol packets of the quality assurance level 4 include a protocol packet 4-0 to a protocol packet 4-3, protocol packets of the quality assurance level 3 include a protocol packet 3-0 and a protocol packet 3-1, and protocol packets of the quality assurance level 0 include a protocol packet 0-0 to a protocol packet 0-2. As shown in (b) in FIG. 8, if the baseband chip of the mobile phone receives a new protocol packet, and a quality assurance level of the protocol packet is 6, the baseband chip of the mobile phone adds the virtual queue to the virtual queue. As shown in (c) in FIG. 8, the new protocol packet is located after the protocol packet 6-2 and before the protocol packet 4-0 in the virtual queue. The baseband chip of the mobile phone may first send the protocol packet 6-0 to the protocol packet 6-2 and the new protocol packet, then send the protocol packet 4-0 to the protocol packet 4-3, then send the protocol packet 3-0 and the protocol packet 3-5, and finally send the protocol packet 0-0 to the protocol packet 0-2.

In a case of uplink network congestion, to reduce a delay of a protocol packet having a high quality requirement, for example, a delay and a packet loss rate of an audio stream in an audio and video call, and ensure quality of the protocol packet, the baseband chip of the mobile phone may further determine storage duration of each protocol packet. If storage duration of a protocol packet in the baseband chip exceeds a storage duration threshold corresponding to the protocol packet, the baseband chip of the mobile phone may further delete the protocol packet. In this way, a protocol packet having a lower quality requirement can be deleted in time, thereby allowing more resources to be used for transmission of a protocol packet having a high quality requirement, and ensuring quality of the protocol packet.

Further, to simplify a processing procedure of the baseband chip, reduce overheads, and improve running efficiency of the baseband chip, storage duration thresholds of protocol packets (the first protocol packet and the second protocol packet) of different quality assurance levels may be the same. For example, for the foregoing case 3, storage duration thresholds of the protocol packets with the quality assurance levels being 6, 4, 3, and 0 are the same, for example, are all 3s (second, s).

Alternatively, storage duration thresholds of protocol packets of different quality assurance levels may be different. For example, to further improve quality assurance effect, if a quality assurance level is positively correlated with a sending sequence of a protocol packet, a storage duration threshold of the protocol packet may be positively correlated with the quality assurance level of the protocol packet. For example, for the foregoing case 3, storage duration thresholds of the protocol packets with the quality assurance levels being 6, 4, 3, and 0 respectively correspond to 0.4s, 0.8s, 1s, and 2s.

It may be understood that in a scenario having a high delay requirement and a low packet loss rate requirement, the storage duration threshold may be set to a first storage duration threshold. For a scenario having a low delay requirement and a high packet loss rate requirement, the storage duration threshold may be set to a second storage duration threshold. The second storage duration threshold is greater than or equal to the first storage duration threshold. For example, the first storage duration threshold may be 1s, 2s, or 3s, and the second storage duration threshold may be greater than 3s. For example, the second storage duration threshold may be 5s or 10s.

It may be understood that if a quality assurance level is negatively correlated with a sending sequence of a protocol packet, a storage duration threshold of the protocol packet may be negatively correlated with the quality assurance level of the protocol packet.

When sending a protocol packet, the baseband chip of the mobile phone sends the protocol packet to an RLC layer based on a virtual queue. After being processed by the RLC layer, a MAC layer, and a PHY layer, the packet is sent through an air interface.

According to the uplink transmission method provided in FIG. 6, in this way, the first corresponding to each of the at least one information type of each second app may be transmitted based on priority levels of different information types in different apps, and a transmission sequence of protocol packets corresponding to information types that have different requirements for instructions, such as timeliness, in different apps is coordinated. For example, for an information type having a high quality requirement, a higher priority level may be set. In this way, the terminal device may preferentially send a protocol packet corresponding to the information type having the high quality requirement, so that a delay and a packet loss rate of the protocol packet corresponding to the information type having the high quality requirement can be reduced, and quality of the protocol packet corresponding to the information type having the high quality requirement can be better ensured.

For ease of understanding of embodiments of this application, the following further provides a description by using an example in which apps running on the mobile phone include an app 7 to an app 9, and the app 7 may be used to perform an audio and video call.

The audio and video call may include a call setup process and a call process. In the call setup process, information sent by the app 7 is call signaling. In the call process, information sent by the app 7 is an audio stream and a video stream. In addition, in the call setup process and the call process, the app 7 may further send text information. The call signaling, the audio stream, and the video stream are all information having a special requirement for timeliness or integrity.

For the app 7, the app 7 is a first app, and the AP of the mobile phone may obtain priority policy information of the app 7. The priority policy information indicates that a priority level of a protocol packet carrying call signaling is 5, a priority level of a protocol packet carrying an audio stream is 4, and a priority level of a protocol packet carrying a video stream is 1.

The mobile phone receives a second operation performed by the user on the mobile phone, and sets up a call (enters the call setup process). Information to be sent by the app 7 is the call signaling. Based on this, the AP of the mobile phone may determine that the app 7 is a second app.

It is assumed that in apps running on the mobile phone, only the app 1 is the second app. After determining the second app, the AP of the mobile phone determines priority information, and sends, to the baseband chip, a protocol packet carrying the call signaling of the app 1, each type of protocol packet carrying information of an app 8 and the app 9, and the priority information. The priority information may indicate that a quality assurance level of the call signaling is 4, and a quality assurance level of each type of protocol packet of the app 8 and the app 9 is 0.

After receiving the protocol packet carrying the call signaling of the app 1, each type of protocol packet carrying the information of the app 8 and the app 9, and the priority information, the baseband chip may send the protocol packets based on the quality assurance level of each protocol packet. For example, the baseband chip may preferentially send a protocol packet having a high quality assurance level, for example, preferentially send the call signaling, and then send each type of protocol packet carrying the information of the app 8 and the app 9.

In this way, the call signaling may be preferentially sent, thereby improving a call completion rate and reducing a call delay. For example, the quality assurance level of the protocol packet carrying the call signaling may be the quality assurance level of the protocol packet carrying the call signaling.

After the call is set up, the app 7 enters the call process, and information to be sent by the app 7 includes an audio stream and a video stream. Based on this, the AP of the mobile phone may determine that the app 7 is a second app.

After determining the second app, the AP of the mobile phone may determine priority information, where the priority information includes: a quality assurance level of a protocol packet carrying the audio stream being 4, and a quality assurance level of a protocol packet carrying the video stream being 1, and send the protocol packet carrying the audio stream, the protocol packet carrying the video stream, and the priority information to the baseband chip.

The baseband chip receives the protocol packet carrying the audio stream, the protocol packet carrying the video stream, and the priority information, and sends the protocol packet carrying the audio stream and the protocol packet carrying the video stream based on the priority information. For example, the baseband chip may preferentially send the protocol packet carrying the audio stream, and then send the protocol packet carrying the video stream. In this way, a delay and a packet loss rate of audio can be reduced, thereby improving audio experience.

In conclusion, in a call scenario of the audio and video call, a sequence of sending different types of information between different apps may be coordinated, and call signaling is preferentially sent, so that a call success rate can be improved. During the audio and video call, a sequence of sending different types of information between different applications may be coordinated, and a protocol packet carrying an audio stream is preferentially sent, thereby better ensuring audio and video call experience. It may be understood that, in embodiments of this application, an information stream having a high timeliness requirement may be an information stream in another scenario, for example, an information stream in a process of scanning to pay, user login, red envelope grabbing, or emergency location reporting. In other words, an information stream having a priority level may be an information stream in a process of scanning to pay, user login, red envelope grabbing, emergency location reporting, or the like. For a specific implementation principle, refer to related descriptions of the call signaling or the audio stream. Details are not described herein again. It may be understood that, in the priority policy information, a priority level of the information stream in the process of scanning to pay, user login, red envelope grabbing, emergency location reporting, or the like may be set to the highest.

In this embodiment of this application, S601 and S602 are optional steps.

It should be noted that, in the foregoing embodiments, an example in which the terminal device is a mobile phone is used for description. It may be understood that the mobile phone in the foregoing embodiments may alternatively be another terminal device, for example, a smartwatch or a tablet. This is not limited in embodiments of this application.

In addition, in the foregoing embodiments, an Android system is used as an example to describe a specific method for implementing control of the terminal device between functional modules. It may be understood that corresponding functional module may also be disposed in another operating system, for example, a HarmonyOS, to implement the foregoing uplink transmission method. Provided that functions implemented by the functional modules are similar to those in embodiments of this application, the functional modules fall within the scope of the claims of this application and equivalent technologies thereof.

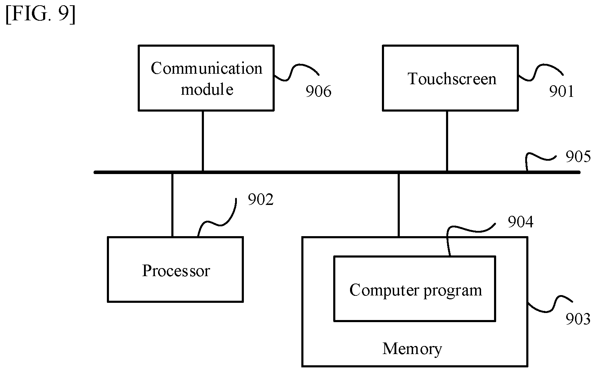

As shown in FIG. 9, an embodiment of this application discloses a terminal device. The terminal device may be the terminal device in the foregoing embodiments, for example, a mobile phone. The terminal device may specifically include: a touchscreen 901, where the touchscreen 901 includes a touch sensor and a display; one or more processors 902; a memory 903; a communication module 906; one or more apps (not shown); and one or more computer programs 904. The foregoing components may be connected through one or more communication buses 905. The one or more computer programs 904 are stored in the memory 903 and are configured to be executed by the one or more processors 902. The one or more computer programs 904 include instructions, and the instructions may be used to perform related steps performed by the terminal device in the foregoing embodiments.

An embodiment of this application further provides an AP. The AP may be configured to perform steps S601 to S604 in FIG. 6.

An embodiment of this application further provides a baseband chip. The baseband chip may be configured to implement step S605 in FIG. 6.

An embodiment of this application further provides a computer-readable storage medium. The computer-readable storage medium includes a computer program (which may also be referred to as computer instructions). When the computer program is run on a computer, the computer is enabled to perform functions or steps performed by the mobile phone in the uplink transmission method shown in FIG. 6.

In addition, an embodiment of this application may further provide a computer program product. The computer program product includes a computer program. When the computer program is run on a computer, the computer is enabled to perform functions or steps performed by the mobile phone in the uplink transmission method shown in FIG. 6.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person skilled in the art may clearly learn from the foregoing descriptions of the implementations that, for convenience and brevity of description, division into the foregoing functional modules is only used as an example for description. In actual application, the foregoing functions may be allocated to different functional modules for implementation based on a requirement, that is, an inner structure of an apparatus is divided into different functional modules, to complete all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An uplink transmission method, applied to a terminal device, wherein the terminal device comprises an application processor AP and a baseband chip, and the method comprises: determining, by the AP based on priority policy information corresponding to at least one second app, a quality assurance level of a first protocol packet corresponding to each of at least one information type of each second app;
sending, by the AP to the baseband chip, the quality assurance level of the first protocol packet corresponding to each of the at least one information type of each second app and the first protocol packet corresponding to each of the at least one information type of each second app; and
sending, by the baseband chip based on the quality assurance level of the first protocol packet corresponding to each of the at least one information type of each second app, the first protocol packet corresponding to each of the at least one information type of each second app.

2. The method according to claim 1, wherein the priority policy information indicates a priority level of at least one information type of the app corresponding to the priority policy information.

3. The method according to claim 2, wherein the determining, by the AP based on priority policy information corresponding to at least one second app, a quality assurance level of a protocol packet corresponding to each of at least one information type of each second app comprises:
determining, by the AP based on a priority level corresponding to each of the at least one information type of each second app, the quality assurance level of the protocol packet corresponding to each of the at least one information type of each second app.

4. The method according to any one of claims 1 to 3, wherein a running status of the second app meets an effective condition of a quality assurance function, and the effective condition of the quality assurance function comprises: being effective when an app is in a foreground or in a background; or the effective condition comprises: being effective when an app is in a foreground.

5. The method according to claim 4, wherein the priority policy information indicates an effective condition of a quality assurance function of the app corresponding to the priority policy information; and before the determining, by the AP based on priority policy information corresponding to at least one second app, a quality assurance level of a first protocol packet corresponding to each of at least one information type of each second app, the method further comprises:
obtaining, by the AP, the priority policy information corresponding to at least one first app; and
determining, by the AP, the at least one second app based on the priority policy information corresponding to the at least one first app.

6. The method according to any one of claims 1 to 5, wherein the second app is an app having quality assurance permission.

7. The method according to any one of claims 1 to 6, wherein the method further comprises:
obtaining, by the baseband chip, storage duration of the first protocol packet corresponding to each of the at least one information type of each second app; and
when the storage duration of the first protocol packet is greater than or equal to a storage duration threshold corresponding to the first protocol packet, deleting, by the baseband chip, the first protocol packet.

8. The method according to claim 7, wherein the storage duration threshold of the first protocol packet is positively correlated with the quality assurance level of the first protocol packet.

9. A terminal device, wherein the terminal device comprises an application processor AP and a baseband chip, wherein
the AP is configured to determine, based on priority policy information corresponding to at least one second app, a quality assurance level of a first protocol packet corresponding to each of at least one information type of each second app;
the AP is further configured to send, to the baseband chip, the quality assurance level of the first protocol packet corresponding to each of the at least one information type of each second app and the first protocol packet corresponding to each of the at least one information type of each second app; and
the baseband chip is configured to send, based on the quality assurance level of the first protocol packet corresponding to each of the at least one information type of each second app, the first protocol packet corresponding to each of the at least one information type of each second app.

10. The terminal device according to claim 9, wherein the priority policy information indicates a priority level of at least one information type of the app corresponding to the priority policy information.

11. The terminal device according to claim 10, wherein determining, by the AP based on the priority policy information corresponding to the at least one second app, the quality assurance level of the protocol packet corresponding to each of the at least one information type of each second app comprises:
determining, by the AP based on a priority level corresponding to each of the at least one information type of each second app, the quality assurance level of the protocol packet corresponding to each of the at least one information type of each second app.

12. The terminal device according to any one of claims 9 to 11, wherein a running status of the second app meets an effective condition of a quality assurance function, and the effective condition of the quality assurance function comprises: being effective when an app is in a foreground or in a background; or the effective condition comprises: being effective when an app is in a foreground.

13. The terminal device according to claim 12, wherein the priority policy information indicates an effective condition of a quality assurance function of the app corresponding to the priority policy information; and before determining, based on the priority policy information corresponding to the at least one second app, the quality assurance level of the first protocol packet corresponding to each of the at least one information type of each second app, the AP is further configured to:
obtain the priority policy information corresponding to at least one first app; and
determine the at least one second app based on the priority policy information corresponding to the at least one first app.

14. The terminal device according to any one of claims 9 to 13, wherein the second app is an app having quality assurance permission.

15. The terminal device according to any one of claims 9 to 14, wherein
the baseband chip is further configured to: obtain storage duration of the first protocol packet corresponding to each of the at least one information type of each second app; and
when the storage duration of the first protocol packet is greater than or equal to a storage duration threshold corresponding to the first protocol packet, delete the first protocol packet.

16. The terminal device according to claim 15, wherein the storage duration threshold of the first protocol packet is positively correlated with the quality assurance level of the first protocol packet.

17. A communication system, wherein the communication system comprises a terminal device and a network device, wherein
the terminal device is configured to perform the method according to any one of claims 1 to 8, and the network device is configured to receive a first protocol packet from the terminal device.

18. A computer-readable storage medium, wherein the computer-readable storage medium comprises a computer program or instructions; and when the computer program or the instructions are run on a computer, the computer is enabled to perform the uplink transmission method according to any one of claims 1 to 8.

19. A computer program product, wherein the computer program product comprises a computer program or instructions; and when the computer program or the instructions are run on a computer, the computer is enabled to perform the uplink transmission method according to any one of claims 1 to 8.
